# EUROPÄISCHE PATENTSCHRIFT

(11) **EP 3 620 251 B1**
(45) Veröffentlichungstag und Bekanntmachung des Hinweises auf die Patenterteilung: **01.03.2023**
(21) Anmeldenummer: 19195951.9
(22) Anmeldetag: 06.09.2019
(51) Int. Cl.: B23F 5/16

(54) **VERFAHREN ZUR VERZAHNBEARBEITUNG EINES WERKSTÜCKS, SOIW VERZAHNMASCHINE UND SOFTWARE DAFÜR**
METHOD FOR MACHINING A WORKPIECE TO PRODUCE TEETH AND MACHINE AND SOFTWARE FOR CARRYING OUT THE METHOD
PROCÉDÉ D'USINAGE DE DENTURE D'UNE PIÈCE À USINER, MACHINE À TAILLER LES ENGRENAGES ET LOGICIEL CORRESPONDANT

(30) Priorität: 06.09.2018 DE 102018121788
(43) Veröffentlichungstag der Anmeldung: 11.03.2020
(73) Patentinhaber: Liebherr-Verzahntechnik GmbH, 87437 Kempten (DE)
(72) Erfinder: Hipke, Martin, 87435 Kempten (DE)
(74) Vertreter: Behr, Wolfgang

(56) Entgegenhaltungen:
- CN-A- 106 271 874
- DE-A1-102012 012 617
- DE-A1-102012 016 515
- DE-A1-102013 109 981
- DE-C- 934 136

## Beschreibung

Die vorliegende Erfindung betrifft ein Verfahren gemäß dem Oberbegriff des Anspruchs 1 zur spanabhebenden Verzahnbearbeitung eines Werkstücks mit einem Werkzeug, bei welchem eine Rotation des Werkzeugs wälzgekoppelt mit einer Rotation des Werkstücks erfolgt, insbesondere Verzahnbearbeitung eines Werkstücks durch Wälzschälen, sowie eine Verzahnmaschine mit einer ein Wälzprogramm umfassenden Steuerung und eine Software für eine Verzahnmaschine.

Beim einem solchen Verfahren erfolgt die Verzahnbearbeitung üblicherweise in mehreren Bearbeitungsschritten S1, S2, ..., wobei zwischen zwei Bearbeitungsschritten der Achsabstand geändert wird, so dass der insgesamt zur Erzeugung der gewünschten Soll-Verzahnung des Werkstücks notwendige Materialabtrag über mehrere Schritte verteilt wird.

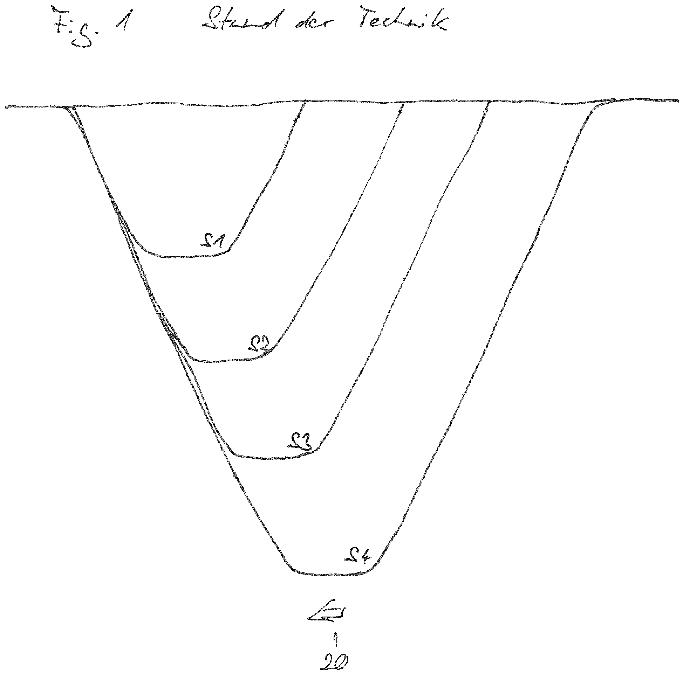

Aus der Druckschrift DE 10 2012 012 617 A1 ist es bekannt, der Wälzbewegung eine Zusatzbewegung zu überlagern, durch welche die bei wenigstens zwei unmittelbar aufeinanderfolgenden Bearbeitungsschritten erzeugten Flankenschnitte zusammenhängen. Wie in Fig. 1 gezeigt, wird hierfür der der Wälzkopplung für jeden Bearbeitungsschritt ein fester Verdrehwinkel so überlagert, dass die in den einzelnen Bearbeitungsschritten S1, S2, ... erzeugten Konturen der einlaufenden linken Flanke der Soll-Verzahnung folgen. Hierdurch wird die Erzeugung von U-förmigen Spänen, welche leicht zwischen Werkzeug und Werkstück verklemmen, verhindert. Das Verfahren hat jedoch den Nachteil, dass das Werkzeug sehr ungleichmäßig abgenutzt wird.

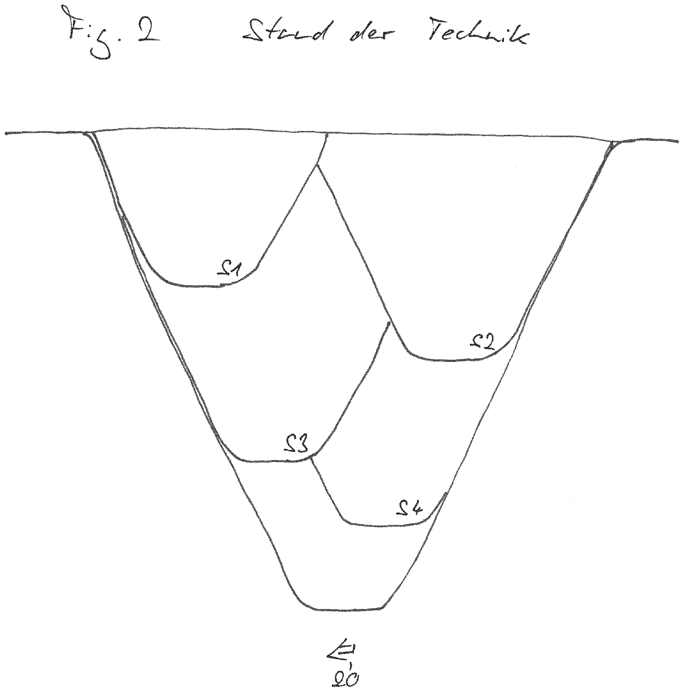

Aus der DE 10 2013 109 981 A1 ist ein Verfahren gemäß dem Oberbegriff von Anspruch 1 bekannt, bei welchem sich wie in Fig. 2 gezeigt zwar der Absolutbetrag des Verdrehwinkels weiterhin schrittweise verkleinert, das Vorzeichen des Verdrehwinkels jedoch nach einer Gruppe von Bearbeitungsschritten S1, S2, ... und bevorzugt nach jedem Bearbeitungsschritt ändert, so dass abwechselnd die linke und die rechte Zahnflanke bearbeitet werden. Hierdurch ergibt sich eine symmetrische Belastung und damit Abnutzung des Werkzeugs.

Aufgabe der vorliegenden Erfindung ist es, die aus dem Stand der Technik bekannten Verfahren weiter zu verbessern.

Diese Aufgabe wird erfindungsgemäß durch die Verfahren gemäß Anspruch 1 gelöst.

Bevorzugte Ausgestaltungen der vorliegenden Erfindung sind Gegenstand der Unteransprüche.

Die vorliegende Erfindung umfasst ein Verfahren zur spanabhebenden Verzahnbearbeitung eines Werkstücks mit einem Werkzeug, bei welchem eine Rotation des Werkzeugs wälzgekoppelt mit einer Rotation des Werkstücks erfolgt, insbesondere Verzahnbearbeitung eines Werkstücks durch Wälzschälen, wobei die Verzahnbearbeitung in mehreren Bearbeitungsschritten erfolgt, wobei zwischen zwei Bearbeitungsschritten der Achsabstand und/oder ein der Wälzkopplung überlagerter Verdrehwinkel zwischen Werkstück und Werkzeug geändert werden, so dass das Werkzeug bei den Bearbeitungsschritten jeweils eine Kontur schneidet, welche abwechselnd näher zu einer ersten und einer zweiten Flanke der Soll-Verzahnung des Werkstücks verläuft. Das Verfahren gemäß der vorliegenden Erfindung ist dadurch gekennzeichnet, dass das Werkzeug das Werkstück für mehrere Bearbeitungsschritte, welche näher zu einer zweiten Flanke verlaufen, über die gesamte bereits erzeugte Zahnhöhe spanabhebend bearbeitet.

Die Erfindung beruht auf der Erkenntnis, dass durch die Bearbeitung wenigstens einer Flanke über die gesamte bereits erzeugte Zahnhöhe der Spanabtrag pro Bearbeitungsschritt erhöht wird. Dadurch, dass weiterhin abwechselnd eine Kontur geschnitten wird, welche näher zu einer ersten und einer zweiten Flanke der Soll-Verzahnung des Werkstücks verläuft, werden beide Flanken des Werkzeugs immer noch relativ gleichmäßig belastet.

Bevorzugt wird für mindestens drei Bearbeitungsschritte und/oder für alle Bearbeitungsschritte, welche näher zu einer zweiten Flanke verlaufen, das Werkstück über die gesamte bereits erzeugte Zahnhöhe spanabhebend bearbeitet.

Bevorzugt wird bei der Bearbeitung des Werkstücks über die gesamte bereits erzeugte Zahnhöhe die zweite Flanke zumindest über den Hauptteil der bisher erzeugten Zahnhöhe mit einem gleichbleibend dicken Spanabtrag bearbeitet, insbesondere über eine Erstreckung von mehr als 75 % der Zahnhöhe und weiter bevorzugt über eine Erstreckung von mehr als 90 % der Zahnhöhe.

Alternativ oder zusätzlich wird bei der Bearbeitung des Werkstücks über die gesamte bereits erzeugte Zahnhöhe einen Spanabtrag auf der zweiten Flanke erzeugt, dessen minimale Dicke in einer Richtung normal auf der Flanke mindestens 10 % der maximalen Dicke des Spanabtrags in einer radialen Richtung und/oder der Veränderung der Zustellung zwischen dem aktuellen Bearbeitungsschritt und dem letzten Bearbeitungsschritt, welcher näher zu der zweiten Flanke verlief, beträgt. Bevorzugt beträgt die minimale Dicke des Spanabtrags in einer Richtung normal auf der Flanke mindestens 20 % der maximalen Dicke des Spanabtrags in einer radialen Richtung und/oder der Veränderung der Zustellung zwischen dem aktuellen Bearbeitungsschritt und dem vorangegangenen Bearbeitungsschritt, welcher näher zu der zweiten Flanke verlief.

Gemäß einer bevorzugten Ausgestaltung ist vorgesehen, dass für mehrere Bearbeitungsschritte, welche näher zu der zweiten Flanke verlaufen, der gleiche Verdrehwinkel eingesetzt wird.

Der Erfinder der vorliegenden Anmeldung hat erkannt, dass sich durch den schrittweise verkleinernden Verdrehwinkel gemäß der DE 10 2013 109 981 A1, durch welchen auf beiden Flanken der Verzahnung ein erster Schneidkantenabschnitt des Schneidzahnes des Werkzeugs gegenüber anderen Schneidkantenabschnitten dieses Schneidzahnes mit einem zumindest verminderten Spanabtrag angreift, die Effizienz der Verzahnbearbeitung erheblich verringert wird.

Durch die bevorzugte Verwendung des gleichen Verdrehwinkels zur Bearbeitung zumindest einer Flanke wird dagegen eine höhere Effizienz der Verzahnbearbeitung erreicht, insbesondere da der Spanabtrag pro Bearbeitungsschritt erhöht werden kann. Dadurch, dass weiterhin abwechselnd eine Kontur geschnitten wird, welche näher zu einer ersten und einer zweiten Flanke der Soll-Verzahnung des Werkstücks verläuft, werden beide Flanken des Werkzeugs immer noch relativ gleichmäßig belastet.

Bevorzugt wird für mindestens drei Bearbeitungsschritte und/oder für alle Bearbeitungsschritte, welche näher zu einer zweiten Flanke verlaufen, der gleiche Verdrehwinkel eingesetzt.

Weitere bevorzugte Ausgestaltungen werden im folgenden näher beschrieben.

In einer bevorzugten Ausgestaltung der vorliegenden Erfindung handelt es sich bei der zweiten Flanke um die auslaufende Flanke der Verzahnung. Da Späne auf der auslaufenden Seite der Verzahnung aus der Verzahnung nach außen transportiert werden, sind die erfindungsgemäß erzeugten langen Späne auf dieser Flanke weniger problematisch als auf der einlaufenden Flanke.

In einer möglichen Ausgestaltung der vorliegenden Erfindung wird für die mehreren Bearbeitungsschritte, welche näher zu der zweiten Zahnflanke verlaufen, ein Verdrehwinkel von Null eingesetzt. Bevorzugt wird daher jeder zweite Bearbeitungsschritt mit einem symmetrisch zur gewünschten Zahnlücke des Werkstücks angeordneten Werkzeugzahn erzeugt.

In einer ersten möglichen Ausgestaltung der vorliegenden Erfindung wird für mehrere Bearbeitungsschritte, welche näher zu einer ersten Zahnflanke verlaufen, der Verdrehwinkel schrittweise so verringert, dass die auf dieser Zahnflanke erzeugten Flankenschnitte zusammenhängen und/oder der Kontur der Soll-Verzahnung des Werkstücks folgen und/oder das Werkzeug das Werkstück auf dieser Zahnflanke nur über einen unteren Teil der bereits erzeugten Zahnhöhe spanabhebend bearbeitet. Auf der ersten Flanke werden daher relativ kurze Späne erzeugt, was die Gefahr eines Einklemmens der Späne verringert.

Bevorzugt handelt es sich bei der ersten Zahnflanke um die einlaufende Zahnflanke. Auf dieser Flanke sind lange Späne problematischer, da diese in die Zahnlücke hinein gezogen werden, so dass die Erzeugung kurzer Späne hier von besonderem Vorteil ist.

Eine gewisse Asymmetrie in der Belastung des Werkzeugs wird bei dieser ersten Ausgestaltung in Kauf genommen, um auf der ersten Seite kürzere Späne zu erhalten.

In einer zweiten möglichen Ausgestaltung der vorliegenden Erfindung wird für mehrere Bearbeitungsschritte, welche näher zu einer ersten Zahnflanke verlaufen, der gleiche Verdrehwinkel eingesetzt und/oder das Werkzeug bearbeitet das Werkstück sowohl auf Seiten der einlaufenden als auch auf Seiten der auslaufenden Flanke in mehreren Bearbeitungsschritten über die gesamte Zahnhöhe spanabhebend.

Hierdurch ergeben sich zwar auf beiden Flanken lange Späne. Dafür erhält man eine symmetrische Belastung des Werkzeugs.

In einer möglichen Ausgestaltung der zweiten Ausgestaltung wird der Absolutbetrag des Verdrehwinkels für mehrere Bearbeitungsschritte gleich groß gewählt, wobei das Vorzeichen des Verdrehwinkels je nachdem, ob ein Schnitt erzeugt wird, welcher näher zu einer ersten oder zu einer zweiten Zahnflanke verläuft, wechselt.

In einer möglichen Ausgestaltung der vorliegenden Erfindung wird der Vorschub und/oder Schnittgeschwindigkeit und/oder die Änderung der Zustellung zwischen zwei Bearbeitungsschritten für mindestens zwei Bearbeitungsschritte variiert. Das erfindungsgemäße Verfahren erlaubt hierdurch eine Prozessoptimierung.

Bevorzugt wird für einen Bearbeitungsschritt, welcher näher zur zweiten Flanke verläuft, ein höherer Vorschub und/oder eine größere Zustellung und/oder eine höhere Schnittgeschwindigkeit gewählt als für einen vorangegangenen und/oder folgenden Bearbeitungsschritt, welcher näher zur ersten Flanke verläuft. Insbesondere handelt es sich dabei bei der ersten Flanke um die einlaufende Flanke und der zweiten Flanke um die auslaufende Flanke.

Die einlaufende Flanke unterliegt auf Grund der ungünstigeren Spanabfuhrbedingungen einer höheren Schneidenbelastung. Nachdem in einem vorangegangenen Bearbeitungsschritt zunächst Material an der einlaufenden Flanke entfernt wird, können die Schnittbedingungen im folgenden Bearbeitungsschritt, bei dem weniger Material mit der Schneide für die einlaufende Flanke geschnitten wird, deutlich höher sein, indem mit höherem Vorschub, größerer Zustellung und/oder höherer Schnittgeschwindigkeit gearbeitet wird. Somit kann bei zwei aufeinander folgenden Bearbeitungsschritten mit ähnlicher Schneidenbelastung gearbeitet werden, was dann gesamt gesehen zu kürzeren Bearbeitungszeiten führt bei annähernd gleicher Werkzeugstandzeit.

Das Werkzeug wird normalerweise bei Erreichen eines bestimmten Verschleißzustandes zur Nacharbeit gegeben. Bei der bisherigen Auslegung wird dieser Verschleiß üblicherweise nur an der Schneide für die einlaufende Flanke erreicht.

Durch die geänderte Prozessauslegung wird nun die Schneide für die auslaufende Flanke höher belastet, was aber nicht dazu führt, dass das Werkzeug früher aufbereitet werden muss. Die auslaufende Werkzeugschneide erreicht vielmehr durch die höhere Belastung ebenfalls mehr Verschleiß, verbleibt aber weiterhin unterhalb der zulässigen Verschleißmarkenbreite.

Die vorliegende Erfindung umfasst weiterhin eine Verzahnmaschine gemäß Anspruch 10 mit
- einer um eine Drehachse drehbaren Werkzeugaufnahme,
- einer um eine Drehachse drehbaren Werkstückaufnahme,
- mindestens einer weiteren Bewegungsachse, über welche ein Achsabstand zwischen Werkzeugaufnahme und Werkstückaufnahme einstellbar ist, und
- einer Steuerung zur Ansteuerung der Drehachsen und/oder der Bewegungsachse,
wobei die Steuerung ein Wälzprogramm umfasst, durch welches ein in der Werkzeugaufnahme aufgenommenes Werkzeug ein in der Werkstückaufnahme aufgenommenes Werkstück spanabhebend in Wälzkopplung bearbeitet, insbesondere durch Wälzschälen bearbeitet. Das Wälzprogramm führt die Verzahnbearbeitung in mehreren Bearbeitungsschritten durch, wobei zwischen zwei Bearbeitungsschritten der Achsabstand und ein der Wälzkopplung überlagerter Verdrehwinkel zwischen Werkstück und Werkzeug geändert werden, so dass das Werkzeug bei den Bearbeitungsschritten jeweils eine Kontur schneidet, welche abwechselnd näher zu einer ersten und einer zweiten Flanke der Soll-Verzahnung des Werkstücks verläuft. Erfindungsgemäß ist gemäß dem ersten Aspekt vorgesehen, dass das Wälzprogramm für mehrere Bearbeitungsschritte, welche näher zu einer zweiten Flanke verlaufen, den gleichen Verdrehwinkel einsetzt. Gemäß dem zweiten Aspekt, welcher auch mit dem ersten Aspekt kombiniert werden kann, ändert das Wälzprogramm zwischen zwei Bearbeitungsschritten den Achsabstand und den der Wälzkopplung überlagerten Verdrehwinkel zwischen Werkstück und Werkzeug so, dass das Werkzeug das Werkstück für mehrere Bearbeitungsschritte, welche näher zu einer zweiten Flanke verlaufen, über die gesamte bereits erzeugte Zahnhöhe spanabhebend bearbeitet.

Bei dem Wälzprogramm handelt es sich bevorzugt um ein Wälzschälprogramm zur Wälzschälbearbeitung des Werkstücks.

Bevorzugt ist die Verzahnmaschine so ausgestaltet, dass das Wälzprogramm ein Verfahren zur Verzahnbearbeitung implementiert, wie es oben näher beschrieben wurde. Bevorzugt ist das Wälzprogramm programmiert, um die Drehachsen und/oder Bewegungsachsen zur Durchführung des Verfahrens automatisch anzusteuern.

Die Drehachsen und/oder Bewegungsachsen der Verzahnmaschine sind bevorzugt NC-gesteuert.

Die vorliegende Erfindung umfasst weiterhin eine Software gemäß Anspruch 12 für eine Verzahnmaschine mit einem Wälzprogramm, welches ein Verfahren zur Verzahnbearbeitung implementiert, wie es oben beschrieben wurde. Eine solche Software kann bevorzugt auf einer Verzahnmaschine eingespielt werden, um ein erfindungsgemäßes Verfahren auf der Verzahnmaschine durchführen zu können.

Die vorliegende Erfindung wird nun anhand von Figuren und Ausführungsbeispielen näher beschrieben. Dabei zeigen:
- Fig. 1:: die Bearbeitungsschritte bei einem ersten Verfahren gemäß dem Stand der Technik,
- Fig. 2:: die Bearbeitungsschritte bei einem zweiten Verfahren gemäß dem Stand der Technik,
- Fig. 3:: die Bearbeitungsschritte bei einem ersten Ausführungsbeispiel eines Verfahrens gemäß der vorliegenden Erfindung,
- Fig. 4:: die Bearbeitungsschritte bei einem zweiten Ausführungsbeispiel eines Verfahrens gemäß der vorliegenden Erfindung,
- Fig. 5:: ein Ausführungsbeispiel einer erfindungsgemäßen Verzahnmaschine und
- Fig. 6:: ein Werkzeug und Werkstück bei der Durchführung eines erfindungsgemäßen Verfahrens.

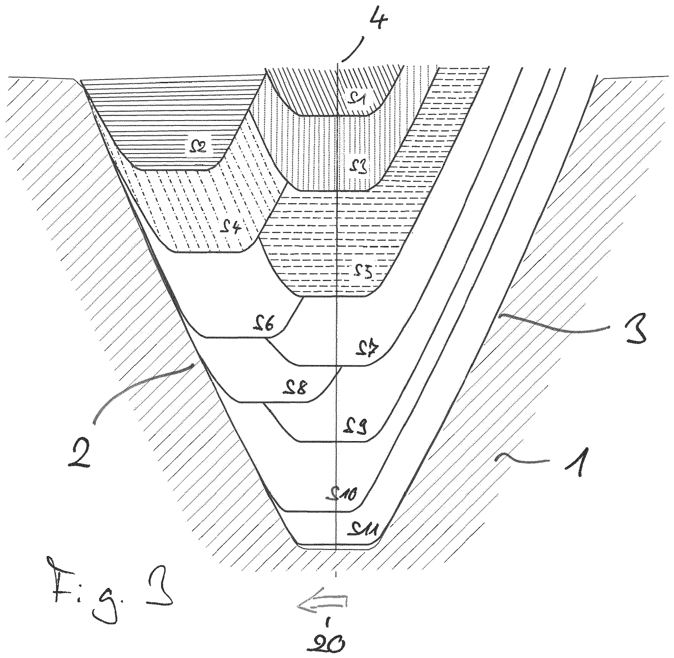

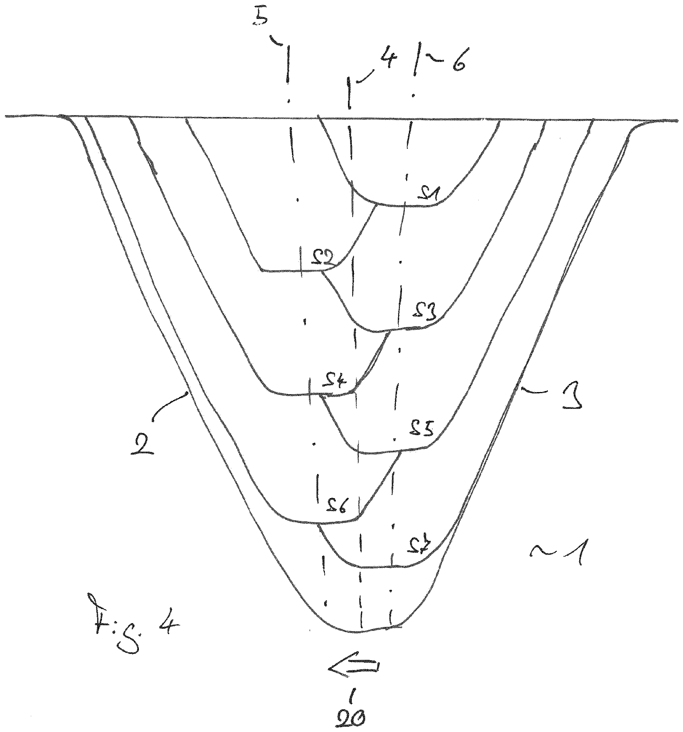

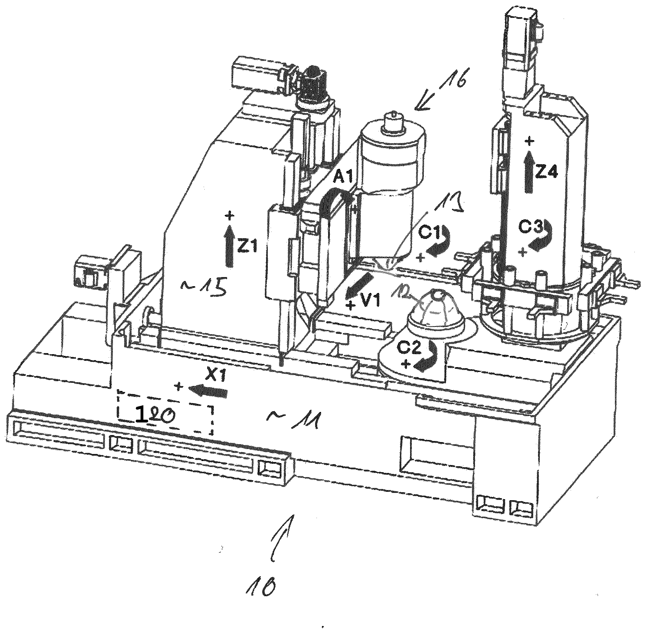

Fig. 3 und 4 zeigen die Bearbeitungsschritte S1, S2, ... bei zwei Ausführungsbeispielen der vorliegenden Erfindung. Dabei ist eine Zahnlücke eines Werkstücks 1 mit einer einlaufenden Flanke 2 und einer auslaufenden Flanke 3 der Soll-Verzahnung des Werkstücks sowie die Konturen der durch die einzelnen Bearbeitungsschritte erzeugten Flankenschnitte gezeigt. Die Richtung, in welche das Werkstück rotiert, ist dabei mit dem Bezugszeichen 20 versehen und verläuft in der Zeichnung von rechts nach links.

Die Bearbeitung des Werkstücks 1 erfolgt durch ein nicht dargestelltes, mit Schneidzähnen versehendes Werkzeug, welches in Wälzkopplung auf dem Werkstück abrollt und hierbei das Werkstück spanabhebend bearbeitet. Bei dem Werkstück handelt es sich bevorzugt um ein Zahnrad mit einer Stirnverzahnung. Als Werkzeug wird bevorzugt ein Wälzschälrad eingesetzt. Ein Schneidzahn des Werkzeugs fährt bei der Bearbeitung auf der einlaufenden Flanke 2 in die Zahnlücke hinein und auf der auslaufenden Flanke 3 wieder aus der Zahnlücke heraus.

Beiden Ausführungsbeispielen ist gemeinsam, dass durch eine entsprechende Änderung eines der Wälzkopplung zwischen Werkzeug und Werkstück überlagerten Verdrehwinkels für jeden Bearbeitungsschritt eine Kontur geschnitten wird, welche abwechselnd näher an der einlaufenden Flanke 2 und näher an der auslaufenden Flanke 3 angeordnet ist.

Weiterhin ist beiden Ausführungsbeispielen gemeinsam, dass der Verdrehwinkel zumindest für jene Bearbeitungsschritte, welche näher zu einer zweiten Flanke, hier der auslaufenden Flanke 3, angeordnet sind, der gleiche Verdrehwinkel eingesetzt wird.

Bei dem in Fig. 3 dargestellten ersten Verfahren weist jeder zweite Bearbeitungsschritt S1, S3, S5, ... einen Verdrehwinkel von Null auf, und wird daher symmetrisch zur Soll-Geometire der Zahnlücke bzw. symmetrisch zur Mittelachse 4 der Zahnlücke gesetzt. Auf Seiten der auslaufenden Flanke werden daher jeweils lange Späne erzeugt, welche sich über die gesamte Höhe der Zahnlücke erstrecken.

Die andere Hälfte der Bearbeitungsschritte S2, S4, S6, ... wird dagegen mit einem kleiner werdenden Verdrehwinkel so gesetzt, dass die einzelnen durch die Bearbeitungsschritte erzeugten Flankenschnitte sich entlang der Sollkontur der einlaufenden Flanke 2 aneinander anschließen. Hierdurch werden auf Seiten der einlaufenden Flanke nur kurze Späne erzeugt, da das Werkzeug jeweils nur im Bereich seiner Spitze einen nennenswerten Materialabtrag erzeugt und entlang seiner Flanke an der bereits erzeugten Flanke anliegt.

Bei dem ersten Ausführungsbeispiel sind nur die Bearbeitungsschritte S2, S4, S6, ... qualitätsbildend, so dass die Bearbeitungsschritte S1, S3, S5, ... im Hinblick auf die Bearbeitungseffizienz und/oder den Verschleiss optimiert werden können. Insbesondere kann dabei die Zustellung, der Vorschub und die Schnittgeschwindigkeit zwischen den einzelnen Schritten verändert werden.

Bei dem in Fig. 4 gezeigten zweiten Ausführungsbeispiel weisen sowohl die Bearbeitungsschritte S1, S3, S5, ..., welche eine Kontur erzeugen, die näher an der auslaufenden Flanke 3 liegt, als auch die mit diesen abwechselnden Bearbeitungsschritte S2, S4, S6, ..., welche eine Kontur erzeugen, welche näher an der einlaufenden Flanke liegt, einen für die jeweilige Reihe von Bearbeitungsschritten konstanten Verdrehwinkel 6 bzw. 5 auf. Hierdurch werden auf beiden Seiten jeweils lange Späne erzeugt, welche sich über die gesamte Höhe der Zahnlücke erstrecken. Die beiden Verdrehwinkel 6 und 5 liegen im Ausführungsbeispiel symmetrisch zur Mittelachse 4 der Zahnlücke.

Bei dem zweiten Ausführungsbeispiel ist nur der letzte oder die beiden letzten Bearbeitungsschritte qualitätsbildend, so dass alle vorangegangenen Bearbeitungsschritte im Hinblick auf die Bearbeitungseffizienz und/oder den Verschleiß optimiert werden können.

Figur 5 zeigt nun eine perspektivische Ansicht eines Ausführungsbeispiels einer Verzahnmaschine 10, welche zur Durchführung der erfindungsgemäßen Verfahren einsetzbar ist und hierfür eine entsprechend programmierte Steuerung 120 umfasst.

Die Verzahnmaschine 10 weist einen links dargestellten Bearbeitungskopf 16 mit einer Werkzeugaufnahme 13 und eine mittig dargestellte Werkstückaufnahme 12 auf. Zur Durchführung einer Verzahnbearbeitung kann ein in der Werkstückaufnahme 12 eingespanntes Werkstück durch ein in der Werkzeugaufnahme 13 eingespanntes Werkzeug bearbeitet werden. Rechts ist der Gegenhalterständer mit einem Ringlader gezeigt.

Die Verzahnmaschine weist im Ausführungsbeispiel Bewegungsachsen A1, C1, V1, X1, Z1 zum Bewegen der Werkzeugaufnahme 13 und C2 zum Bewegen der Werkstückaufnahme 12 auf. Der Gegenständerhalter weist eine Linearachse Z4 für den nicht gezeigten Gegenständerarm und die Drehachse C3 des Ringladers auf.

Im Einzelnen ermöglicht die Drehachse C1 der Werkzeugaufnahme eine Rotation des Werkzeugs und die Drehachse C2 der Werkstückaufnahme eine hiermit wälzgekoppelte Drehbewegung des Werkstücks.

Die Linearachse X1 erlaubt eine translatorische Bewegung des Werkzeugs senkrecht zur Drehachse des Werkzeugs und des Werkstücks, und damit eine Veränderung des Achsabstands, d.h. eine Zustellung des Werkzeugs zum Werkstück.

Die Linearachse Z1 erlaubt eine translatorische Bewegung des Werkzeugs in vertikaler Richtung bzw. parallel zur Drehachse des Werkstücks, und damit ein Verfahren des Werkzeugs in Breitenrichtung des Werkstücks.

Die Schwenkachse A1 erlaubt eine Schwenkbewegung des Werkzeugs und damit die Einstellung des Achskreuzwinkels.

Die Linearachse V1 erlaubt eine Verfahrbewegung des Werkzeugs in einer Richtung senkrecht zur X1-Achse und Z1-Achse. Die V1-Achse ist hierfür bevorzugt zwischen der Z1-Achse und der A1-Achse angeordnet.

Im Ausführungsbeispiel ist dabei der Bearbeitungskopf mit den Achsen C1 und A1 über zwei Schlitten, welche die Achse V1 und die Achse Z1 zur Verfügung stellen, an einem Werkzeugständer 15 angeordnet, welcher wiederum über die Achse X1 auf einem Tisch 11 angeordnet ist, welcher die Werkstückaufnahme 12 trägt.

Die erfindungsgemäße Verzahnmaschine kann jedoch auch eine andere Achskonfiguration aufweisen.

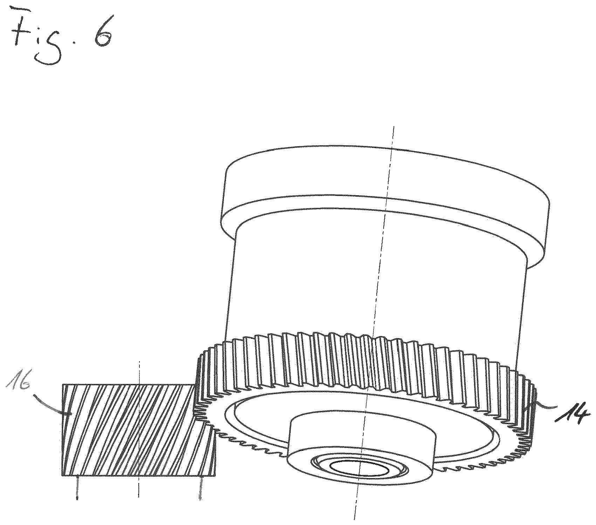

Fig. 6 zeigt nun ein Wälzschälwerkzeug 14, insbesondere ein Wälzschälrad, welches erfindungsgemäß mit einer Verzahnung des zu verzahnenden Werkstücks 16 in Eingriff steht und diese in Wälzkopplung spanabhebend bearbeitet.

In jedem Bearbeitungsschritt wird das Werkzeug 14 dabei in Achsrichtung des Werkstücks 16 an diesem entlang geführt und erzeugt auf diesem spanabhebend eine durch den Achsabstand und den Verdrehwinkel vorgegebene Kontur. Zwischen zwei solchen Bearbeitungsschritten wird dann im Rahmen der Erfindung der Achsabstand und/oder der Verdrehwinkel geändert, um im nächsten Bearbeitungsschritt eine entsprechend verschobene Kontur zu erzeugen.

Das erfindungsgemäße Verfahren kann sowohl zur Herstellung von außenverzahnten als auch zur Herstellung von innenverzahnten Werkstücken eingesetzt werden.

Bei den Werkstücken handelt es sich bevorzugt um Zahnräder mit einer Stirnradverzahnung. Die verzahnten Werkstücke werden bevorzugt durch das erfindungsgemäße Verfahren aus einem Rohling geschnitten.

## Patentansprüche

1. Verfahren zur spanabhebenden Verzahnbearbeitung eines Werkstücks (1; 16) mit einem Werkzeug (14), bei welchem eine Rotation des Werkzeugs wälzgekoppelt mit einer Rotation des Werkstücks erfolgt, insbesondere Verzahnbearbeitung eines Werkstücks durch Wälzschälen,
wobei die Verzahnbearbeitung in mehreren Bearbeitungsschritten (S1, S2, S3 ...) erfolgt
wobei zwischen zwei Bearbeitungsschritten der Achsabstand und ein der Wälzkopplung überlagerter Verdrehwinkel zwischen Werkstück und Werkzeug geändert werden, so dass das Werkzeug bei den Bearbeitungsschritten jeweils eine Kontur schneidet, welche abwechselnd näher zu einer ersten (2) und einer zweiten (3) Flanke der Soll-Verzahnung des Werkstücks verläuft
**dadurch gekennzeichnet,**
**dass** das Werkzeug das Werkstück für mehrere Bearbeitungsschritte, welche näher zu einer zweiten Flanke (3) verlaufen, über die gesamte bereits erzeugte Zahnhöhe spanabhebend bearbeitet.

2. Verfahren nach Anspruch 1, wobei für mehrere Bearbeitungsschritte, welche näher zu der zweiten Flanke (3) verlaufen, der gleiche Verdrehwinkel (6) eingesetzt wird.

3. Verfahren nach Anspruch 1 oder 2, wobei es sich bei der zweiten Flanke (3) um die auslaufende Flanke der Verzahnung handelt.

4. Verfahren nach einem der vorangegangenen Ansprüche, wobei für die mehreren Bearbeitungsschritte (S1, S3, S5,...), welche näher zu der zweiten Zahnflanke verlaufen, ein Verdrehwinkel (4) von Null eingesetzt wird.

5. Verfahren nach einem der vorangegangenen Ansprüche, wobei für mehrere Bearbeitungsschritte (S2, S4, S6,...), welche näher zu einer ersten Zahnflanke (2) verlaufen, der Verdrehwinkel schrittweise so verringert wird, dass die auf dieser Zahnflanke erzeugten Flankenschnitte zusammenhängen und/oder der Kontur der Soll-Verzahnung des Werkstücks folgen und/oder das Werkzeug das Werkstück auf dieser Zahnflanke nur über einen unteren Teil der bereits erzeugten Zahnhöhe spanabhebend bearbeitet.

6. Verfahren nach Anspruch 5, wobei es sich bei der ersten Zahnflanke (2) um die einlaufende Zahnflanke handelt.

7. Verfahren nach einem der Ansprüche 1 bis 3, wobei für mehrere Bearbeitungsschritte (S2, S4, S6,...), welche näher zu einer ersten Zahnflanke (2) verlaufen, der gleiche Verdrehwinkel (5) eingesetzt wird und/oder wobei das Werkzeug das Werkstück sowohl auf Seiten der einlaufenden als auch auf Seiten der auslaufenden Flanke in mehreren Bearbeitungsschritten (S2, S4, S6,... bzw. S1, S3, S5,...), über die gesamte Zahnhöhe spanabhebend bearbeitet.

8. Verfahren nach Anspruch 7, wobei der Absolutbetrag des Verdrehwinkels für mehrere Bearbeitungsschritte gleich groß gewählt wird und das Vorzeichen des Verdrehwinkels je nachdem, ob ein Schnitt erzeugt wird, welcher näher zu einer ersten oder zu einer zweiten Zahnflanke verläuft, wechselt.

9. Verfahren nach einem der vorangegangenen Ansprüche, wobei Vorschub und/oder Schnittgeschwindigkeit und/oder die Änderung der Zustellung zwischen zwei Bearbeitungsschritten für mindestens zwei Bearbeitungsschritte variiert, wobei bevorzugt für einen Bearbeitungsschritt, welcher näher zur zweiten Flanke verläuft, ein höherer Vorschub und/oder eine größere Zustellung und/oder eine höhere Schnittgeschwindigkeit gewählt wird als für einen vorangegangenen und/oder folgenden Bearbeitungsschritt, welcher näher zur ersten Flanke verläuft.

10. Verzahnmaschine (10) mit
- einer um eine Drehachse (C1) drehbaren Werkzeugaufnahme (13),
- einer um eine Drehachse (C2) drehbaren Werkstückaufnahme (12),
- mindestens einer weiteren Bewegungsachse (X1), über welche ein Achsabstand zwischen Werkzeugaufnahme und Werkstückaufnahme einstellbar ist, und
- einer Steuerung (120) zur Ansteuerung der Drehachsen (A1, C1, C2, C3) und/oder der Bewegungsachse (V1, X1, Z1, Z4),
wobei die Steuerung (120) ein Wälzprogramm, insbesondere einem Wälzschälprogramm, umfasst, durch welches ein in der Werkzeugaufnahme aufgenommenes Werkzeug (14) ein in der Werkstückaufnahme aufgenommenes Werkstück (1; 16) spanabhebend in Wälzkopplung bearbeitet, insbesondere durch Wälzschälen bearbeitet,
wobei das Wälzprogramm die Verzahnbearbeitung in mehreren Bearbeitungsschritten (S1, S2, S3, ...) durchführt, wobei zwischen zwei Bearbeitungsschritten der Achsabstand und ein der Wälzkopplung überlagerter Verdrehwinkel zwischen Werkstück und Werkzeug geändert werden, so dass das Werkzeug bei den Bearbeitungsschritten jeweils eine Kontur schneidet, welche abwechselnd näher zu einer ersten (2) und einer zweiten (3) Flanke der Soll-Verzahnung des Werkstücks verläuft,
**dadurch gekennzeichnet,**
**dass** das Wälzprogramm für mehrere Bearbeitungsschritte (S1, S3, S5, ...), welche näher zu einer zweiten Flanke (3) verlaufen, den gleichen Verdrehwinkel (6) einsetzt und/oder
**dass** das Wälzprogramm zwischen zwei Bearbeitungsschritten (S1, S2, S3, ...), den Achsabstand und den der Wälzkopplung überlagerten Verdrehwinkel zwischen Werkstück (1; 16) und Werkzeug (14) so ändert, dass das Werkzeug das Werkstück für mehrere Bearbeitungsschritte (S1, S3, S5, ...), welche näher zu einer zweiten Flanke (3) verlaufen, über die gesamte bereits erzeugte Zahnhöhe spanabhebend bearbeitet.

11. Verzahnmaschine nach Anspruch 10, wobei das Wälzprogramm ein Verfahren nach einem der Ansprüche 1 bis 9 implementiert.

12. Software für eine Verzahnmaschine mit einem Wälzprogramm, insbesondere einem Wälzschälprogramm, welches ein Verfahren nach einem der Ansprüche 1 bis 9 implementiert.

## Claims

1. Method for chip-removing gear manufacturing machining of a workpiece (1; 16) by means of a tool (14), in which a rotation of the tool takes place in generating coupling with a rotation of the workpiece, in particular gear manufacturing machining of a workpiece by skiving,
wherein the gear manufacturing machining is carried out in a plurality of machining steps (S1, S2, S3),
wherein the center distance and a rotational angle between the workpiece and the tool superimposed on the generating coupling is/are changed between two machining steps, so that the tool will cut in the machining steps a respective contour that extends alternately closer to a first (2) and a second (3) flank of the target toothing of the workpiece,
**characterized in that**
for a plurality of machining steps which take place closer to a second flank (3), the tool machines the workpiece in a chip-removing manner over the entire tooth height that has already been generated.

2. Method according to claim 1, wherein the same rotational angle (6) is used for a plurality of machining steps taking place closer to a second flank (3).

3. Method according to claim 1 or 2, wherein the second flank (3) is the outgoing flank of the toothing.

4. Method according to one of the preceding claims, wherein a rotational angle (4) of zero is used for the plurality of machining steps (S1, S3, S5...) taking place closer to the second tooth flank.

5. Method according to one of the preceding claims, wherein for a plurality of machining steps (S2, S4, S6...) taking place closer to a first tooth flank (2), the rotational angle is reduced step by step in such a way that the flank cuts generated on this tooth flank are connected to one another and/or follow the contour of the target toothing of the workpiece, and/or the tool machines the workpiece in a chip-removing manner on this tooth flank only over a lower part of the tooth height that has already been generated.

6. Method according to claim 5, wherein the first tooth flank (2) is the incoming tooth flank.

7. Method according to one of the claims 1 to 3, wherein, for a plurality of machining steps (S2, S4, S6) which take place closer to a first tooth flank (2), the same rotational angle (5) is used and/or wherein the tool machines the workpiece in a chip-removing manner in a plurality of machining steps (S2, S4, S6, ... respectively S1, S3, S5) on the side of the incoming flank as well as on the side of the outgoing flank over the entire tooth height.

8. Method according to claim 7, wherein the absolute value of the rotational angle is selected to be the same for a plurality of machining steps and the sign of the rotational angle changes depending on whether a cut generated runs closer to a first or a second tooth flank.

9. Method according to one of the preceding claims, wherein the axial feed and/or the cutting speed and/or the change of the center feed between two machining steps varies for at least two machining steps, wherein the axial feed and/or the center feed and/or the cutting speed selected for a machining step taking place closer to the second flank preferably exceeds that / exceed those selected for a preceding and/or subsequent machining step taking place closer to the first flank.

10. Gear manufacturing machine (10), comprising
- a tool holder (13) rotatable about a rotary axis (C1),
- a workpiece holder (12) rotatable about a rotary axis (C2),
- at least one further motion axis (X1) by means of which a center distance between the tool holder and the workpiece holder can be adjusted, and
- a control unit (120) for controlling the rotary axes (A1, C1, C2, C3) and/or the motion axis (V1, X1, Z1, Z4),
wherein the control unit (120) comprises a generating machining program, in particular a skiving program, by means of which a tool (14) held in the tool holder machines, in a chip-removing manner, a workpiece (1; 16) held in the workpiece holder, in generating coupling therewith, in particular by skiving, wherein the generating machining program carries out the gear manufacturing machining in a plurality of machining steps (S1, S2, S3, ...) wherein the center distance and/or a rotational angle between the workpiece and the tool superimposed on the generating coupling is/are changed between two machining steps, so that the tool will cut in the machining steps a respective contour that extends alternately closer to a first (2) and a second (3) flank of the target toothing of the workpiece,
**characterized in that**
the generating machining program uses the same rotational angle (6) for a plurality of machining steps (S1, S3, S5...) taking place closer to a second flank (3), and/or
the generating machining program changes between two machining steps (S2, S2, S3...) the center distance and the rotational angle between the workpiece (1; 16) and the tool (14) superimposed on the generating coupling, such that the tool will machine the workpiece in a chip-removing manner for a plurality of machining steps (S1, S3, S5...), which take place closer to a second flank (3), over the entire tooth height that has already been generated.

11. Gear manufacturing machine according to claim 10, wherein the generating machining program implements a method according to one of the claims 1 to 9.

12. Software for a gear manufacturing machine with a generating machining program, in particular a skiving program, which implements a method according to one of the claims 1 to 9.

## Revendications

1. Procédé d'usinage de denture par enlèvement de copeaux d'une pièce (1 ; 16) avec un outil (14), où une rotation de l'outil est effectuée de manière couplée au taillage en développante avec une rotation de la pièce, en particulier un usinage de denture d'une pièce par décolletage en développante,
dans lequel l'usinage de denture est effectué en plusieurs étapes d'usinage (S1, S2, S3, ...),
dans lequel l'écartement des axes et un angle de rotation superposé au couplage au taillage en développante entre la pièce et l'outil sont modifiés entre deux étapes d'usinage de sorte que l'outil découpe, lors des étapes d'usinage, respectivement un contour qui s'étend en alternance davantage à proximité d'un premier (2) et d'un deuxième (3) flanc de la denture théorique de la pièce,
**caractérisé en ce**
**que** l'outil usine par enlèvement de copeaux la pièce pendant plusieurs étapes d'usinage, lesquelles s'étendent davantage à proximité par rapport à un deuxième flanc (3), sur la totalité de la hauteur de dent déjà générée.

2. Procédé selon la revendication 1, dans lequel le même angle de rotation (6) est employé pendant plusieurs étapes d'usinage, lesquelles s'étendent davantage à proximité du deuxième flanc (3).

3. Procédé selon la revendication 1 ou 2, dans lequel le deuxième flanc (3) est le flanc sortant de la denture.

4. Procédé selon l'une quelconque des revendications précédentes, dans lequel un angle de rotation (4) égal à zéro est employé pendant les plusieurs étapes d'usinage (S1, S3, S5, ...), lesquelles s'étendent davantage à proximité du deuxième flanc de dent.

5. Procédé selon l'une quelconque des revendications précédentes, dans lequel l'angle de rotation est progressivement réduit pendant plusieurs étapes d'usinage (S2, S4, S6, ...), lesquelles s'étendent davantage à proximité d'un premier flanc de dent (2), de telle sorte que les découpes de flanc générées sur ledit flanc de dent sont liées et/ou suivent le contour de la denture théorique de la pièce et/ou l'outil usine par enlèvement de copeaux la pièce sur ledit flanc de dent seulement sur une partie inférieure de la hauteur de dent déjà générée.

6. Procédé selon la revendication 5, dans lequel le premier flanc de dent (2) est le flanc de dent entrant.

7. Procédé selon l'une quelconque des revendications 1 à 3, dans lequel le même angle de rotation (5) est employé pendant plusieurs étapes d'usinage (S2, S4, S6, ...), qui s'étendent davantage à proximité par rapport à un premier flanc de dent (2), et/ou dans lequel l'outil usine par enlèvement de copeaux la pièce à la fois sur des côtés du flanc entrant et sur des côtés du flanc sortant lors de plusieurs étapes d'usinage (S2, S4, S6, ... ou S1, S3, S5, ...) sur la totalité de la hauteur de dent.

8. Procédé selon la revendication 7, dans lequel la valeur absolue choisie de l'angle de rotation pendant plusieurs étapes d'usinage est de même importance et le signe algébrique de l'angle de rotation change selon qu'est générée une découpe qui s'étend davantage à proximité par rapport à un premier ou à un deuxième flanc de dent.

9. Procédé selon l'une quelconque des revendications précédentes, dans lequel l'avancement et/ou la vitesse de découpe et/ou la modification du rapprochement entre deux étapes d'usinage pour au moins deux étapes d'usinage varient, dans lequel un avancement plus important et/ou un rapprochement plus important et/ou une vitesse de découpe plus importante sont choisis de manière préférée pour une étape d'usinage, laquelle s'étend davantage à proximité par rapport au deuxième flanc que pour une étape d'usinage précédente et/ou suivante, laquelle s'étend davantage à proximité par rapport au premier flanc.

10. Machine à tailler les engrenages (10) avec
- un logement d'outil (13) pouvant tourner autour d'un axe de rotation (C1),
- un logement de pièce (12) pouvant tourner autour d'un axe de rotation (C2),
- au moins un autre axe de déplacement (X1), par l'intermédiaire duquel un écartement des axes entre le logement d'outil et le logement de pièce peut être réglé, et
- une commande (120) pour piloter les axes de rotation (A1, C1, C2, C3) et/ou l'axe de déplacement (V1, X1, Z1, Z4),
dans lequel la commande (120) comprend un programme de taillage en développante, en particulier un programme de décolletage en développante, par lequel un outil (14) logé dans le logement d'outil usine de manière couplée au taillage en développante par enlèvement de copeaux une pièce (1 ; 16) logée dans le logement de pièce, en particulier par un décolletage en développante,
dans lequel le programme de taillage en développante exécute l'usinage de denture lors de plusieurs étapes d'usinage (S1, S2, S3, ...), dans lequel l'écartement des axes et un angle de rotation superposé au couplage au taillage en développante entre la pièce et l'outil sont modifiés entre deux étapes d'usinage de sorte que l'outil découpe lors des étapes d'usinage respectivement un contour qui s'étend en alternance davantage à proximité par rapport à un premier (2) et à un deuxième (3) flanc de la denture théorique de la pièce,
**caractérisé en ce**
**que** le programme de taillage en développante emploie le même angle de rotation (6) pour plusieurs étapes d'usinage (S1, S3, S5, ...), qui s'étendent davantage à proximité par rapport à un deuxième flanc (3), et/ou que le programme de taillage en développante entre deux étapes d'usinage (S1, S2, S3, ...) modifie l'écartement des axes et l'angle de rotation, superposé au couplage au taillage en développante, entre la pièce (1 ; 16) et l'outil (14) de telle sorte que l'outil usine par enlèvement de copeaux la pièce pendant plusieurs étapes d'usinage (S1, S3, S5, ...), lesquelles s'étendent davantage à proximité par rapport à un deuxième flanc (3), sur la totalité de la hauteur de dent déjà générée.

11. Machine à tailler les engrenages selon la revendication 10, dans laquelle le programme de taillage en développante implémente un procédé selon l'une quelconque des revendications 1 à 9.

12. Logiciel pour une machine à tailler les engrenages avec un programme de taillage en développante, en particulier un programme de décolletage en développante, lequel implémente un procédé selon l'une quelconque des revendications 1 à 9.
